# EUROPEAN PATENT APPLICATION

(11) **EP 1 313 035 A2**
(43) Date of publication of application: **21.05.2003**
(21) Application number: 02257898.3
(22) Date of filing: 15.11.2002
(51) Int. Cl.: G06F 17/30

(54) **A method and system for an extensible client address book application**

(30) Priority: 16.11.2001 US 15192
(71) Applicant: Sun Microsystems, Inc., Santa Clara, California 95054 (US)
(72) Inventor: Saare, John, Lakeport, California 95453 (US); Chang, Jenny, San Jose, California 95132 (US); Polla, Dean, Westminster, Colorado 80234 (US); Sambhus, Mihir, Milpitas, California 95035 (US); O'Brien, Robert, MS SCA12-203 Santa Clara, CA 95054 (US)
(74) Representative: Potter, Julian Mark

(57) **Abstract**

A method for providing extensible client address book functions to a plurality of clients via the Internet. The method includes a portal server receiving a request for address book functions from a client. In response to the request, a Java server page corresponding to the request is accessed. A plurality of tags contained within the Java server page are then accessed. The Java server page is subsequently processed using the tags, wherein the tags provide access to an address book server configured for providing the address book functions. The address book functions include contact information, phone number information, mailing information, and the like. The resulting processed Java server page is then transmitted back to the client. When requests from the client received, the Java server page corresponding to the request can be retrieved from a set of compiled Java server page classes. Extended address book functions can be provided by accessing a plurality of extended tags contained within the Java server page, wherein the address book functions are extended by adding the extended tags corresponding to new address book functionality of the address book server.

## Description

The present invention relates generally to methods and systems for implementing electronic address book functionality for client devices. More specifically, but not exclusively, embodiments of the present invention pertain to a method and system for implementing customizable and efficient cross platform electronic address book access and information retrieval for portable electronic devices.

The use of Web portals has become widespread for obtaining information, news, entertainment, and the like, via the World Wide Web. A Web portal is generally a Web "supersite" that provides a variety of services including Web searching, news, white and yellow pages directories, electronic address book (e-address book) services, e-mail, discussion groups, online shopping and links to other sites. The Web portal term is generally used to refer to general purpose sites, however, it is increasingly being used to refer to vertical market sites that offer the same services, but only to a particular industry such as banking, insurance or computers, or fulfill specific needs for certain types of users, for example, business travelers who are often away from their office or their primary point of business.

Certain types of Web portals have evolved into customized, user type specific sources of information. One example would be a corporate Web site, wherein an internal Web site (intranet) provides proprietary, enterprise-wide information to company employees as well as access to selected public Web sites and vertical-market Web sites (suppliers, vendors, etc.). Such a Web site would typically include a customized search engine for internal documents as well as the ability to customize the portal page for different user groups and individuals. Access to such customized Web sites by business travelers, or other types of users who require concise prompt access to information, is a highly sought-after goal. For example, for a mobile user (e.g., business traveler), it would be advantageous to obtain wireless access to a Web portal via a portable handheld device, such as a cellphone or a wireless PDA. However, presentation of information on the small screens typical with such portable handheld devices requires customization of the Web portal and the formatting of the data it provides.

Standards have been developed to provide a widely used method of formatting data for the smaller screens of portable handheld devices. One such standard is WML (Wireless Markup Language). WML is a tag-based language used in the Wireless Application Protocol (WAP). WML is an XML document type allowing standard XML and HTML tools to be used to develop WML applications. WAP is a standard for providing cellular phones, pagers and other handheld devices with secure access to e-address book information and services Web pages. WAP provides a complete environment for wireless applications that includes a wireless counterpart of TCP/IP and a framework for telephony integration such as call control and phone book access. WAP features the Wireless Markup Language (WML) and is a streamlined version of HTML for small screen displays. It also uses WMLScript, a compact JavaScript-like language that runs in limited memory. WAP is designed to run over all the major wireless networks in place now and in the future.

Comprehensive, all in one, Web portals are becoming increasingly popular. Such portals attempt to provide all the services a user may typically require at a single Web site. For example, a single Web portal may attempt to provide e-address book, calendar, e-mail, director services (e.g., yellow pages, etc.), and the like. However, even though a Web portal may be comprehensive, a desire still exists to provide customized and tailored information in each of the different categories.

Prior art customization processes do not provide an efficient means of customizing traditional "back end" services, such as, for example, electronic address book, in a portal environment. Customization needs to be performed with respect to the content and also the format of the presentation with respect to the type of device being used to access service. Although tools are in place (e.g., wirelessly connected portable handheld devices, WML and WAP based communications standards, customized Web portals, etc.) to provide customized, application specific, information to business travelers and other various types of users via portable handheld devices, existing prior art applications and methods are still generally inadequate.

There currently exists no efficient mechanisms for enabling customization of applications within an HTML desktop as well as in the small display of a PDA type portal device (PDA, cellphone, or some type of target device that support some version of a markup language). For example, prior art customization processes use "top-heavy" functional processes that tend to sacrifice performance in order to allow customization. Prior art customization processes tend to accrue excessive overhead that slows down the performance of the application. This is especially so in the case of PDA type portable devices. Prior art technology for customization tends to involve extensions to the markup languages such as XML, XSL, XSLT. These technologies add layers of interfaces, which can implement customization, but do so at the expense of added execution time and resource requirements.

Thus what is required, is a solution that can customize information presented from a Web site or a Web portal with respect to an individual user. The required solution should enable customization of traditional back and services and information in accordance with widely used markup language communication standards. The required solution should support up customization of applications by the end user while maintaining a large degree of performance scalability. Embodiments of the present invention provides a novel solution to the above requirements.

Embodiments of the present invention provide a method and system for an extensible client specific address book application in a portal server. Embodiments of the present invention provide a solution that can customize information presented from a Web site or a Web portal with respect to an individual user. The embodiments enable customization of traditional back end services and information in accordance with widely used markup language communication standards. The embodiments support the customization of applications by the end user while maintaining a large degree of performance scalability.

In one embodiment, the present invention is implemented as a Web portal based method for providing extensible client address book functions to a plurality of clients via the Internet. The method includes the portal server receiving a request for address book functions from a client. In response to the request, a Java server page corresponding to the request is accessed. A plurality of tags contained within the Java server page are then accessed. The Java server page is subsequently processed using the tags, wherein the tags provide access to an address book server configured for providing the address book functions. The resulting processed Java server page is then transmitted back to the client. When requests from the client are received, the Java server page corresponding to the request can be retrieved from a set of compiled Java server page classes. Extended address book functions can be provided by accessing a plurality of extended tags contained within the Java server page, wherein the address book functions are extended by adding the extended tags corresponding to new address book functionality of the address book server. Address book functions include, for example, automatic name and address correlation, phone number lookups, fax number lookups, contact information, and the like.

In another embodiment, the present invention is implemented as a method for authoring and generating an extended Java server page for providing extensible client address book functions. The method includes the step of invoking a Java server page using a page editor application to generate a new Java server page. The page editor application is used by, for example, a Web page author to update or customize information provided by a Web portal. Using the editor application, a command tag is specified to build or reference a collection of objects. A collection tag is specified that provides access to the collection. A bean tag is specified to access individual objects inside the collection of objects, wherein the command tag, the collection tag, and the bean tag are configured to provide access to address book functions of an address book server. Once the author is satisfied, the new Java server page is saved and stored. The new Java server page includes both HTML content and the tags (e.g. the command, collection, and bean tags) which provide dynamic content. Java server pages can be readily customized by customizing the tags. The tags can be selected from a tag library configured to provide access to a plurality of functions of an address book server.

In other embodiments, the requests for address book functions received from a client can be received in accordance with WAP (wireless application protocol) communication standards. The resulting Java server pages are provided to, for example, the wireless device, in accordance with the WAP communication standards. Similarly, the requests for the address book functions received from a client and the resulting Java server pages returned to the client can be in accordance with WML (wireless application protocol) communication standards. The compatibility with WML and WAP standards ensures compatibility with a variety of different types of portable handheld devices such as cellphones, wirelessly connected PDAs, palmtop computer systems, and the like.

The accompanying drawings, which are incorporated in and form a part of this specification, illustrate embodiments of the invention and, together with the description, serve to explain the principles of the invention:
Figure 1A shows a client/server computer system in accordance with one embodiment of the present invention.
Figure 1B shows a diagram depicting the internal components of Web server and client in accordance with one embodiment of the present invention.
Figure 2 shows components for providing client aware detection and client aware rendering in accordance with one embodiment of the present invention.
Figure 3 shows a flowchart of the steps of a process for generating a Java server page in accordance with one embodiment of the present invention.
Figure 4 shows a flowchart of the steps of another process for generating a Java server page in accordance with another embodiment of the present invention.
Figure 5 shows a flowchart of the steps of a process for generating a Java server page and serving the Java server page to a client in accordance with one embodiment of the present invention.
Figure 6 the shows a diagram of a computer system platform in accordance with one embodiment of the present invention.

Reference will now be made in detail to the embodiments of the invention, a method for using client specific information to customize information retrieved via a server, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of embodiments of the present invention, numerous specific details are set forth in order to provide a thorough understanding of the present invention. However, it will be obvious to one of ordinary skill in the art that embodiments of the present invention may be practiced without these specific details. In other instances, well known methods, procedures, components, and circuits have not been described in detail as not to unnecessarily obscure aspects of the present invention.

Embodiments of the present invention provide a method and system for an extensible client specific address book application in a portal server. Embodiments of the present invention provide a solution that can customize information presented from a Web site or a Web portal with respect to an individual user. The embodiments enable customization of traditional back end services and information in accordance with widely used markup language communication standards. The embodiments support the customization of applications by the end user while maintaining a large degree of performance scalability. Embodiments of the present invention and their benefits are further described below.

### Notation and nomenclature

Some portions of the detailed descriptions which follow are presented in terms of procedures, steps, logic blocks, processing, and other symbolic representations of operations on data bits within a computer memory. These descriptions and representations are the means used by those skilled in the data processing arts to convey most effectively the substance of their work to others skilled in the art. A procedure, computer executed step, logic block, process, etc., are here, and generally, conceived to be self-consistent sequences of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

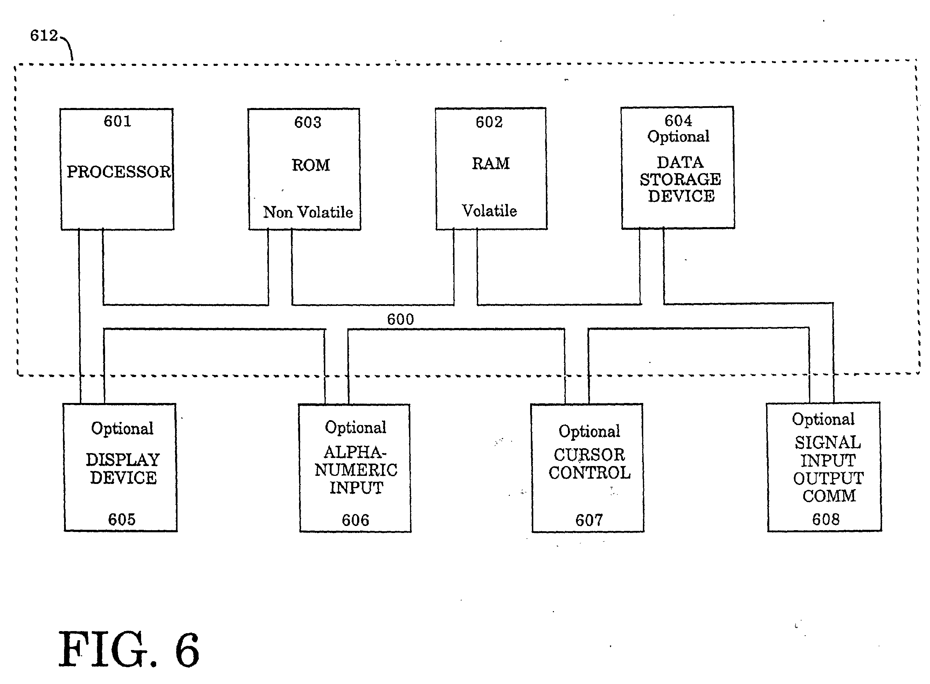

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "processing," "storing," "accessing," "receiving," "determining," "transmitting," or the like, refer to the action and processes of a computer system, or similar electronic computing device, that manipulates and transforms data represented as physical (electronic) quantities within the computer system's registers and memories into other data similarly represented as physical quantities within the computer system registers or memories or other such information storage, transmission, or display devices (e.g., computer system 612 of Figure 6).

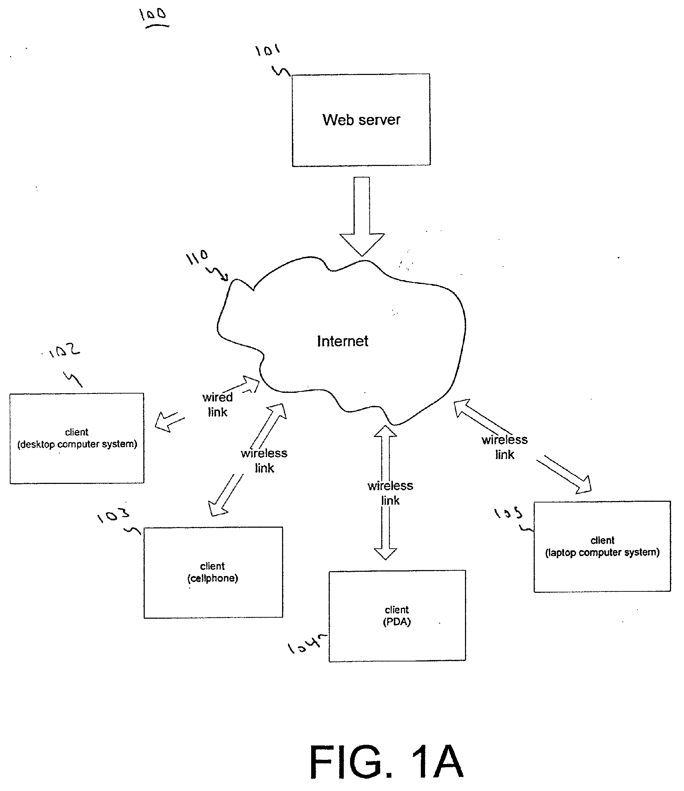

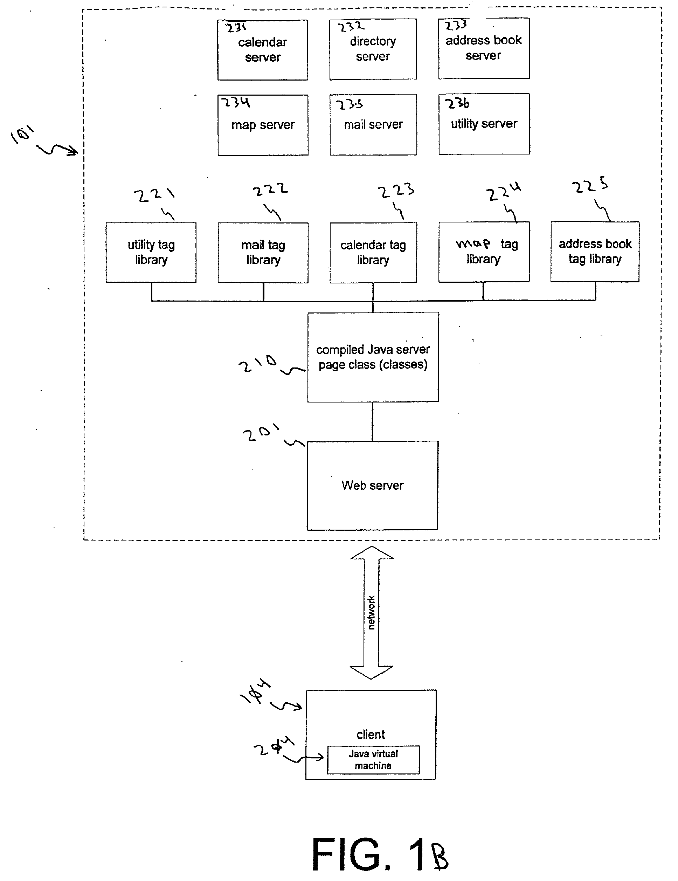

Figure 1 shows a diagram of a client/server system 100 in accordance with one embodiment of the present invention. System 100 depicts a server 101 communicating with a plurality of clients 102-105 via a distributed computer network 110 (e.g., the Internet). Client 102 is a desktop computer system coupled to the Internet via a conventional wired communications link (e.g., Ethernet, AppleTalk, etc.). Clients 103-105 are portable-type clients (e.g., a cellphone, a PDA, and a laptop computer system) and are coupled to the Internet 110 via wireless communications links.

Figure 1 depicts the basic structure of an embodiment of the present invention, wherein a server 101 is used to access electronic address book functions provided by Web server 101 and, for example, to access and retrieve electronic address book information such as, for example, automatic name and address correlation, phone number lookups, fax number lookups, contact information, and the like, and present the address book information in the most efficient manner possible.

In this embodiment, in addition to providing electronic address book functions, server 101 is used to implement a general-purpose Web portal, for serving information, news, entertainment, and the like, via the Internet 110 (e.g., the World Wide Web). As such, server 101 is configured to provide a variety of services including Web searching, news, white and yellow pages directories, address book services, email, discussion groups, online shopping and links to other sites. In one embodiment, server 101 can be used to implement a specifically tailored site that offers particular industry services, such as banking, insurance or computers, or fulfill specific needs for certain types of users, for example, business travelers who are often away from their office or their primary point of business.

Web server 101 can be configured to provide information formatted specifically for a mobile user (e.g., business traveler), thereby providing wireless access to Web portal functions via a portable handheld device, such as a cellphone or a wireless PDA (e.g., client 102). Accordingly, Web server 101 is compatible with widely used communication standards for formatting data for the smaller screens of portable handheld devices. Such standards include WML (Wireless Markup Language) and Wireless Application Protocol (WAP).

Referring still to Figure 1, embodiments of the present invention are directed towards the enablement of traditional "back end" services, such as electronic address book, in a portal environment. The embodiments enable the interaction with server based applications within a conventional HTML desktop (e.g., client 102) as well as in the small displays of portable devices (e.g., clients 103-104). Embodiments of the present invention provide compatibility with a wide variety of different display sizes and device types by using an architecture that is compatible with the various different types of markup languages such as XML, XSL, XSLT.

Embodiments of the present invention support a high degree of customization while maintaining scalability and performance. In contrast, prior art customization processes use "top-heavy" compatibility schemes that involve extensions to the markup languages such as XML, XSL, XSLT. Each of these extensions involves layers of translation software that tend to sacrifice performance in order to allow customization. The layers accrue a large amount of overhead that slows down the performance of the application. Embodiments of the present invention overcome these problems.

To provide customization while maintaining scalability and performance, embodiments of the present invention utilize an architecture based on Java server pages and tag libraries. The Java server pages and tag libraries provide fundamental technologies used to construct the functionality of the embodiments of the present invention. A Java server page contains information required to define the look and feel of a web page as viewed by a user (e.g., via a Web browser).

Figure 1B shows a diagram depicting the internal components of Web server 101 and client 104 in accordance with one embodiment of the present invention. As depicted in Figure 1B, Web portal 101 includes a Web server application 201 for serving Java server pages to a plurality of clients, wherein one such client 104 is shown.

Web server 201 accesses Web pages, particularly Java server pages, from a set of stored, compiled Java server pages (or classes) 210. The Java server pages 210 utilize tags from a plurality of tag libraries 221-225. The tag libraries 221-225 contained tags specific with respect to their imparting functionality. For example, utility tag library 221 contains utility tags, address book tag library 225 contains address book tags, calendar tag library 223 contains calendar tags, and so on. The tags of the various tag libraries 221-225 are used to provide functionality from a group of servers 231-236. In this embodiment, the components 201-236 are software based components executing on the Web portal 101 computer system platform.

Client 104 executes a Java virtual machine 204 for interpreting information received from the Web server 201 and generating the corresponding graphical presentation to the user (e.g., via a Web browser). The Java virtual machine 204 executes Java code provided by Web server 201. As is well known, Java and Java compatible virtual machines provide cross platform portability of software based functions.

Referring still to Figure 1B, the term "Java server page" (or JSP) generally refers to an extension to the Java servlet technology from Sun ™ that provides a standardized programming vehicle for displaying dynamic content on a Web page. For example, a typical JSP includes both HTML and embedded Java source code that is executed in the Web server 201. The HTML provides the page layout that will be returned to the client 104 and the Java provides the processing, for example, to deliver a query to one of the servers 231-236 and fill in the blank fields with the results. In a typical implementation, initially accessed JSPs are compiled into bytecode (e.g., into a servlet) when first encountered and are stored with the rest of the compiled JSP classes 210.

It should be noted that the components of the Web server 101 depicted in Figure 1B are compatible with J2EE (Java 2 Platform, Enterprise Edition) technology developed by Sun™. J2EE comprises a platform for building Web-based enterprise applications.

Referring still to Figure 1B, a typical operation of Web portal 101 is now described. In providing address book functionality to the connected clients, Web portal 101 receives a request for address book functions from a client, in this case client 104. In response to the request, Web server 201 accesses a Java server page corresponding to the request from the compiled Java server page classes 210. A plurality of tags contained within the Java server page are then accessed. The Java server page is subsequently processed using the tags, wherein the tags provide access to an address book server 233 configured for providing the address book functions. The resulting processed Java server page is then transmitted back to the client 104.

It should be noted that the requests for address book functions received from client 104 can be received in accordance with WAP (wireless application protocol) communication standards. The resulting Java server pages are provided to, for example, the wireless device 104, in accordance with the WAP communication standards. Similarly, the requests for the address book functions received from a client and the resulting Java server pages returned to the client can be in accordance with WML (wireless application protocol) communication standards. The compatibility with WML and WAP standards ensures compatibility with a variety of different types of portable handheld devices such as cellphones, wirelessly connected PDAs, palmtop computer systems, and the like.

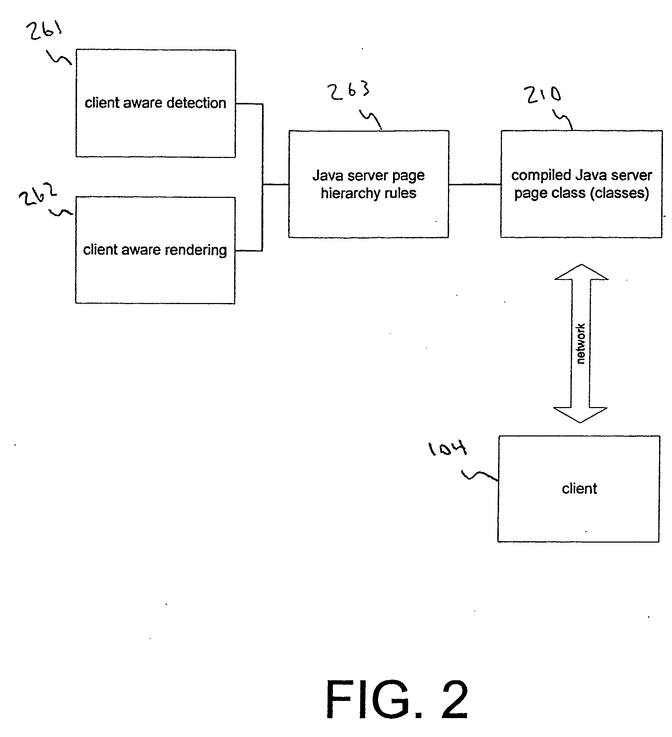

Figure 2 shows components for providing client aware detection and client aware rendering in accordance with one embodiment of the present invention. A client aware detection component 261 and a client aware rendering component 262 access a set of Java server page hierarchy rules 263 in order to format information for particular requirements of, for example, portable handheld devices.

To facilitate compatibility with WML and WAP enabled portable handheld devices such as cellphones, wirelessly connected PDAs, palmtop computer systems, and the like, embodiments of the present invention can implement client aware rendering wherein the information is formatted and sized specifically for the smaller display sizes of portable devices. This functionality involves the step of detecting the particular type of client device requesting the information (performed by the detection component 261) and rendering the information specifically for that type of client (performed by component 262). The information provided by components 261-262 are then used to access a hierarchy of Java server page rules that specify, for example, which versions of pages are served to particular versions of clients (e.g., types of cellphones, PDAs, types of displays, color vs. black and white, etc.). A resulting page is then selected from the page classes 210 and served to the client 104.

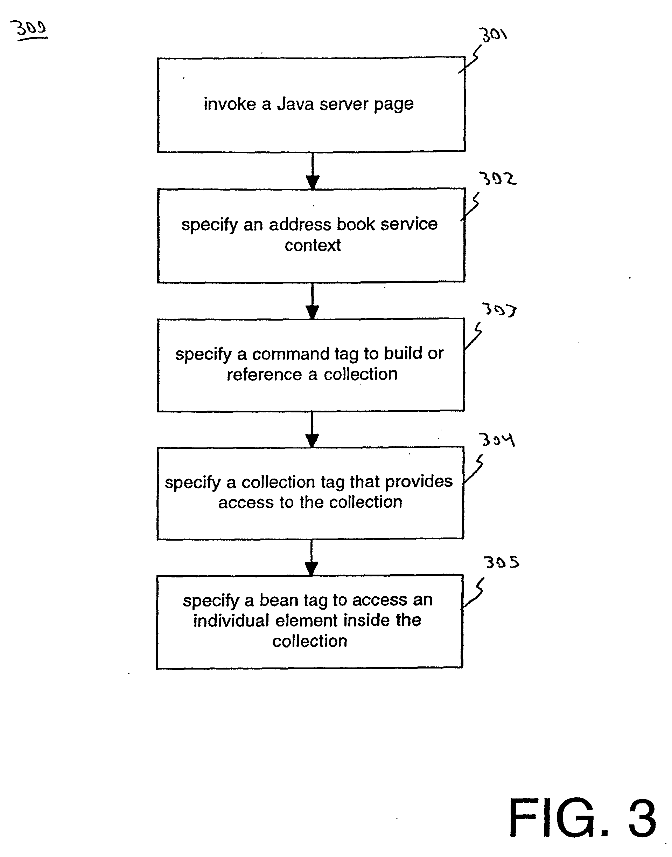

Figure 3 shows a flowchart of the steps of a process 300 for generating a Java server page in accordance with one embodiment of the present invention. Process 300 shows the steps involved in authoring and generating an extended Java server page for providing extensible client address book functions.

Process 300 begins in step 301, where a Java server page is invoked using a page editor application to generate a new Java server page. The page editor application is used by, for example, a Web page author to update or customize information provided by a Web portal. In step 302, an address book service context is specified for the process 300. In step 303, using the editor application, a command tag is specified to build or reference a collection of objects. In step 304, a collection tag is specified that provides access to the collection. In step 305, a bean tag is specified to access individual objects inside the collection of objects, wherein the command tag, the collection tag, and the bean tag are configured to provide access to address book functions of an address book server.

Once the author is satisfied, the new Java server page is saved and stored. The new Java server page includes both HTML content and the tags which provide dynamic content. Java server pages can be readily customized by customizing the tags. The tags can be selected from a tag library configured to provide access to a plurality of functions of an address book server.

Thus, embodiments of the present invention include three basic types of tags, the command tags, the collection tags, and the bean tags. The tags present a method for abstracting information. Tags utilize the fact that information can be represented as collections. For example, collection tags function by grouping items into logical or related sets. Command tags function by initiating the building of the collection of objects or items. Bean tags function as pointers to the elements or individual items/objects of a collection. Accordingly, a typical invocation sequence can involve the specification of a command tag that builds or references a collection, a collection tag that accesses that collection, and accessing each element within the collection using a bean tag.

The tags thus provide a means of easy extension and customization of functions provided by Web portal 101. For example, extended address book functions can be provided by accessing a plurality of extended tags contained within the Java server page, wherein the address book functions are extended by adding the extended tags corresponding to new address book functionality of the address book server 235.

It should be noted that the term "bean" is substantially similar to the term "JavaBean" defined by Sun™ as a component software architecture that runs in the Java environment. JavaBeans are independent Java program modules that are called for and executed. They have been used primarily for developing user interfaces at the client side. The server-side counterpart is Enterprise JavaBeans. Both types of "beans" are part of the J2EE platform.

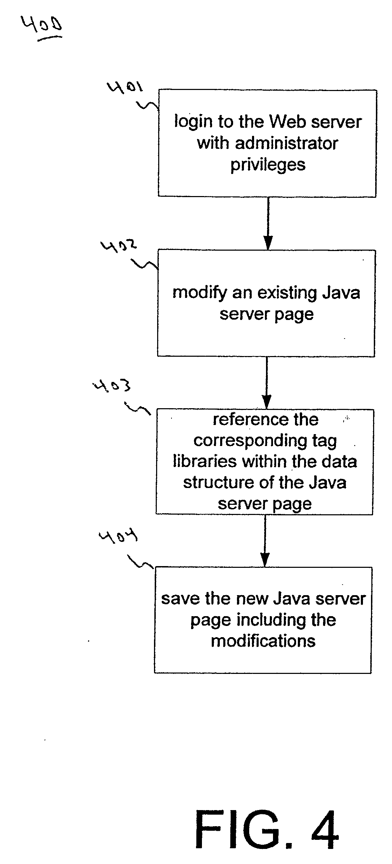

Figure 4 shows a flowchart of the steps of another process 400 for generating a Java server page in accordance with another embodiment of the present invention. Process 400 shows the steps involved in authoring and generating an extended Java server page for providing extensible client address book functions, wherein an existing Java server page is modified by a Web administrator.

Process 400 begins in step 401 where an administrator logs into the Web server 201 with administrator privileges (e.g., logs in with administrator's password, or the like). In step 402, the administrator selects an existing Java server page for modification. The page can be modified, for example, to update information displayed, alter the format of the displayed information, completely replace the information, or the like. In step 403, the administrator references the corresponding tag libraries (e.g., libraries 221-225) within the data structure of the Java server page being edited or modified. Due to the architecture of embodiments of the present invention, this editing process is straightforward and relatively easy for novice users. For example, the editing process is more analogous to "web page authoring" as opposed to "programming" as required by typical prior art dynamic web page maintenance processes. Subsequently, in step 404, the new Java server page including modifications is stored.

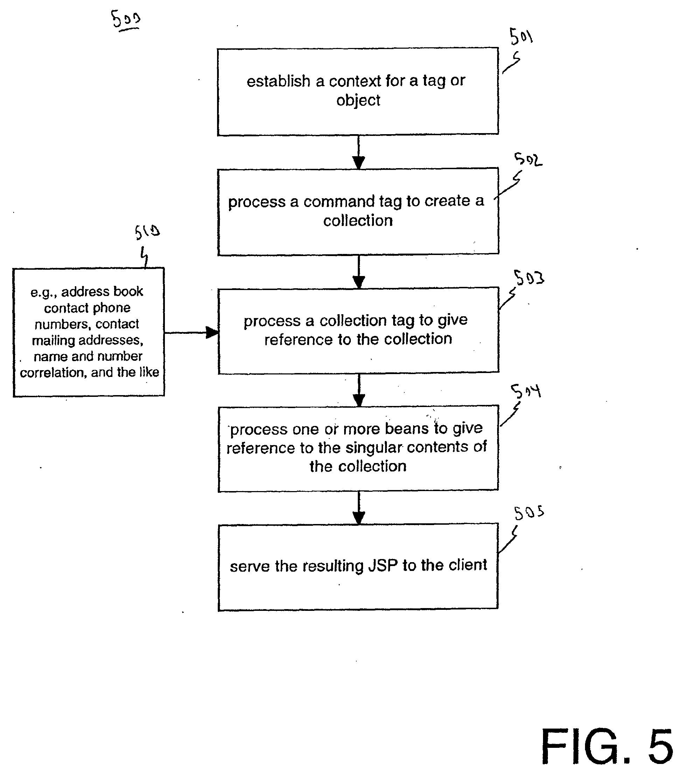

Figure 5 shows a flowchart of the steps of another process 500 for generating a Java server page and serving the Java server page to a client in accordance with one embodiment of the present invention. Process 500 shows the steps involved in serving a Java server page as performed by a Web portal (e.g., Web portal 101 of Figure 1) in accordance with one embodiment of the present invention.

Process 500 begins in step 501, where a Web server (e.g., Web server 201) within the Web portal receives a Java server page from a set of compiled Java server pages (e.g., the compiled Java server page classes 210). In response to the Java server page, the Web server establishes the context for the tags and/or objects encountered within the Java server page. In step 502, a command tag within the Java server page is processed to create a collection. In step 503, a collection tag within the Java server page is processed to give reference to the collection. As shown in step 510, this collection can include, for example, collections of address book contact names, collections of address book phone numbers and fax numbers, collections of lines of text of individual address book contact descriptions, and the like. In step 504, one or more bean tags are processed to give reference to the singular contents of the collection (e.g., and individual address book folder, and individual address book message, or the like). In step 505, the resulting Java server page is then served to the client.

In this manner, the HTML of the Java server page provides the basic page layout of the information returned to the client while the tags and the corresponding Java code are executed on the Web server in order to provide back-end functionality (e.g., of the servers 231-236) to provide the information requested by the client (e.g., address book information).

Thus, embodiments of the present invention provide a method and system for an extensible client specific address book application in a portal server. Embodiments the present invention provide a solution that can customize information presented from a Web site or a Web portal with respect to an individual user. The embodiments enable customization of traditional back end services and information in accordance with widely used markup language communication standards. The embodiments support the customization of applications by the end user while maintaining a large degree of performance scalability.

### Computer system environment

Referring to Figure 6, a computer system 612 is illustrated. Within the above discussions, certain processes and steps are discussed that are realized, in one embodiment, as a series of instructions (e.g., software program) that reside within computer readable memory units of system 612 and executed by processors of system 612. When executed, the instructions cause computer system 612 to perform specific actions and exhibit specific behavior which was described in detail above.

Specific aspects of the present invention are operable within a programmed computer system which can function as a client or server machine. A generalized example of such a computer system operable to implement the elements of the present invention is shown in Figure 6. In general, the computer system of an embodiment of the present invention includes an address/data bus 600 for communicating information, one or more central processor(s) 601 coupled with bus 600 for processing information and instructions, a computer readable volatile memory unit 602 (e.g., random access memory, static RAM, dynamic RAM, etc.) coupled with bus 600 for storing information and instructions for the central processor(s) 601, a computer readable non-volatile memory unit 603 (e.g., read only memory, programmable ROM, flash memory, EPROM, EEPROM, etc.) coupled with bus 600 for storing static information and instructions for processor(s) 601. System 612 can optionally include a mass storage computer readable data storage device 604, such as a magnetic or optical disk and disk drive coupled with bus 600 for storing information and instructions. Optionally, system 612 can also include a display device 605 coupled to bus 600 for displaying information to the computer user, an alphanumeric input device 606 including alphanumeric and function keys coupled to bus 600 for communicating information and command selections to central processors) 601, a cursor control device 607 coupled to bus for communicating user input information and command selections to the central processor(s) 601, and a signal input/output device 608 coupled to the bus 600 for communicating messages, command selections, data, etc., to and from processor(s) 601.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order best to explain the principles of the invention and its practical application, thereby to enable others skilled in the art best to utilize the invention and various embodiments with various modifications as are suited to the particular use contemplated.

Insofar as embodiments of the invention described above are implementable, at least in part, using a computer system, it will be appreciated that a computer program for implementing at least part of the described methods and/or the described systems and/or the described address book, is envisaged as an aspect of the present invention. The computer system may be any suitable apparatus, system or device. For example, the computer system may a programmable data processing apparatus, a general purpose computer, a Digital Signal Processor or a microprocessor. The computer program may be embodied as source code and undergo compilation for implementation on a computer, or may be embodied as object code, for example.

Suitably, the computer program can be stored on a carrier medium in computer usable form, which is also envisaged as an aspect of the present invention. For example, the carrier medium may be solid-state memory, optical or magneto-optical memory such as a readable and/or writable disk for example a compact disk and a digital versatile disk, or magnetic memory such as disc or tape, and the computer system can utilise the program to configure it for operation. The computer program may be supplied from a remote source embodied in a carrier medium such as an electronic signal, including radio frequency carrier wave or optical carrier wave.

## Claims

1. A method for providing extensible client address book functions using a distributed computer network comprising:
a) receiving a request for address book functions from a client;
b) accessing a Java server page corresponding to the request;
c) accessing a plurality of tags contained within the Java server page;
d) processing the Java server page using the tags to access an address book server for providing the address book functions; and
e) transmitting the processed Java server page, including address book information responsive to the request, to the client.

2. The method of Claim 1 further comprising:
accessing the Java server page corresponding to the request, wherein the Java server page is retrieved from a set of compiled Java server page classes.

3. The method of Claim 1 or 2 wherein the tags contained within the Java server page are configured to provide access to address book functions provided by the address book server.

4. The method of any preceding Claim further comprising:
providing extended address book functions by accessing a plurality of extended tags contained within the Java server page, wherein the address book functions are extended by adding the extended tags corresponding to new address book functionality of the address book server.

5. The method of any preceding Claim further comprising:
transmitting the processed Java server page to the client in accordance with WAP (wireless application protocol) communication standards.

6. The method of any preceding Claim further comprising:
transmitting the processed Java server page to the client in accordance with WML (wireless markup language) communication standards.

7. A method for generating an extended Java server page for providing extensible client address book functions comprising:
a) invoking a Java server page using a page editor application to generate a new Java server page;
b) specifying a command tag to build or reference a collection of objects;
c) specifying a collection tag that provides access to the collection;
d) specifying a bean tag to access individual objects inside the collection of objects, wherein the command tag, the collection tag, and the bean tag are configured to provide access to address book functions of an address book server; and
e) saving the new Java server page.

8. The method of Claim 7 wherein the new Java server page includes HTML content and the tags from b), c), and d).

9. The method of Claim 8 wherein the tags are configured to provide dynamic content for the Java server page.

10. The method of Claim 8 or 9 further comprising:
customizing the new Java server page by customizing the tags.

11. The method of any one of Claims 7 to 10 wherein the tags from b), c), and d) are selected from a tag library configured to provide access to a plurality of functions of the address book server.

12. A system for providing extensible client address book functions using a distributed computer network comprising:
a computer system having a processor coupled to a memory via a bus, the memory having computer readable code which when executed by the processor cause the computer system to implement a method for providing extensible client address book functions, comprising:
a) receiving a request for address book functions from a client;
b) accessing a Java server page corresponding to the request;
c) accessing a plurality of tags contained within the Java server page;
d) processing the Java server page using the tags to access an address book server for providing the address book functions; and
e) transmitting the processed Java server page, including address book information responsive to the request, to the client.

13. The system of Claim 12 further comprising:
accessing the Java server page corresponding to the request, wherein the Java server page is retrieved from a set of compiled Java server page classes.

14. The system of Claim 12 or 13 wherein the tags contained within the Java server page are configured to provide access to address book functions provided by the address book server.

15. The system of any one of Claims 12 to 14 further comprising:
providing extended address book functions by accessing a plurality of extended tags contained within the Java server page, wherein the address book functions are extended by adding the extended tags corresponding to new address book functionality of the address book server.

16. The system of any one of Claims 12 to 15 further comprising:
transmitting the processed Java server page to the client in accordance with WAP (wireless application protocol) communication standards.

17. The system of any one of Claims 12 to 16 further comprising:
transmitting the processed Java server page to the client in accordance with WML (wireless markup language) communication standards.

18. A computer program for implementing at least part of the method of any one of claims 1 to 11 and/or for implementing at least part of the computer system of any one of claims 12 to 17.

19. A computer usable carrier medium carrying a computer program according to claim 18.
